# EUROPEAN PATENT SPECIFICATION

(11) **EP 2 698 535 B1**
(45) Date of publication and mention of the grant of the patent: **14.10.2015**
(21) Application number: 12180236.7
(22) Date of filing: 13.08.2012
(51) Int. Cl.: F03D 11/00

(54) **Method to approach a wind turbine by helicopter**
Verfahren zum Nähern einer Windkraftanlage mit einem Hubschrauber
Méthode pour approcher une éolienne par hélicoptère

(43) Date of publication of application: 19.02.2014
(73) Proprietor: Siemens Aktiengesellschaft, 80333 München (DE)
(72) Inventor: Lind, Soeren Oemann, 4700 Næstved (DK); Libergren, Peter, 8464 Galten (DK)

(56) References cited:
- EP-A1- 0 083 819
- EP-A1- 1 134 410
- EP-A1- 2 325 484
- EP-A2- 2 431 608
- DE-U1- 20 205 396
- US-A1- 2011 291 853

## Description

The invention relates to a method to approach a wind turbine. Instruments like a wind vane, an anemometer, an aviation light etc, are used at a wind turbine to measure parameters of the weather or of the wind, or for warning purposes.

It is known to locate such instruments on top of the nacelle. The instruments are arranged separately or on a kind of an instrument bar that supports one or more instruments.

The air close to the rotor of the wind turbine is disturbed; this leads to problems with the measurement of the wind or of weather parameters. It is therefore known to arrange the instruments on top of the nacelle, at the rear end of the nacelle with a long distance between the rotor of the wind turbine and the instruments.
This leads to the best measurements of the wind and also to the best visibility for the aviation warning lights.

EP 2431608 A2 describes a wind turbine with a nacelle and a measurement arrangement attached to the outside of the nacelle. The measurement arrangement comprises a mast and measurement equipment that is connected to the mast. An operational position and a maintenance position of the measurement arrangement are described. In the operational position the measurement arrangement is completely outside of the nacelle, and in the maintenance position at least the measurement equipment is positioned inside the nacelle, whereby at least the measurement equipment is movable through an opening in the nacelle into the nacelle.

EP 2325484 A1 describes an arrangement with a nacelle and with at least one instrument of a wind turbine. The instrument is connected with a rod. A channel penetrates the wall of the nacelle. The channel interacts with the rod in a way that the rod and its assigned instrument are moved through the channel between a first and a second position. The instrument is positioned inside the nacelle at the first position for installation and/or service purposes, while the instrument is positioned outside the nacelle at the second position for operation purposes of the instrument.

It is also known to equip a nacelle of a wind turbine with a platform to be approached by a helicopter. This can be a heli-pad to land on with the helicopter. The platform can also be a heli-drop zone, to lower personnel and equipment from the helicopter to the platform.

The platform is usually arranged at the top rear end of the nacelle of the wind turbine. Thus the distance between the helicopter and the rotor of the wind turbine is as large as possible.

In an arrangement like this, instruments in the vicinity of the platform can interfere in helicopter operation at the platform. This can lead to accidents with the helicopter or the personnel using the platform. Also the instruments are in danger to be damaged when the platform is used with a helicopter.

To avoid interference between the helicopter and the instruments, the instruments are often placed closer to the rotor of the wind turbine. This shows the disadvantage, that the measurements performed are not precise enough and the visibility of an aviation warning light is not good enough.

It is therefore the object of the present invention to provide an improved method to approach a nacelle by helicopter.

The aim is reached by the features of the independent claim. Preferred embodiments of the invention are described in the dependent claims.

An arrangement comprises a nacelle and an instrument, where the nacelle is arranged for an approach of a helicopter. The instrument is arranged in a first position on top of the nacelle, while the instrument is in its operational mode in the first position.

The instrument is prepared to be moved from the first position in a second position, thus a free airspace is provided in the vicinity of the nacelle for helicopter operation there.

An instrument can be any kind of instrument mounted to the nacelle of the wind turbine. This includes instruments like a wind vane, an anemometer, an aviation light etc. These instruments are used at a wind turbine to measure parameters of the weather or of the wind, or for warning purposes. The instrument can include a support structure or instrument bar that is arranged between the instrument and the nacelle.

The instrument is arranged in a first position in respect to the nacelle. The first position is the position of the instrument when it is ready to be used or when it is in operation. The first position is the position used for the operation of the instrument.

A nacelle can be arranged for an approach by a helicopter. The nacelle can be equipped with a helipad or a heli-drop zone. A helipad is mounted to the nacelle to allow a helicopter to land on the helipad. A heli-drop zone is a platform mounted to the nacelle or is a part of the nacelle that is especially designed for the use as a heli-drop zone. A heli-drop zone allows to lower parts and personnel from a helicopter to the heli-drop zone or to hoist parts or personnel up to the helicopter. This is usually done by the use of a rope. In the case of a heli-drop zone the helicopter does not land of the platform, but is hovering over the platform.

A helicopter approaching the nacelle of a wind turbine needs a certain free air-space for the operation. This air space is close to or in the vicinity of the nacelle.

When a helicopter is approaching the nacelle to land on the helipad or hover over the heli-drop zone, an instrument in its first position might present a danger for the operation of the helicopter. The instrument of the helicopter might experience a damage due to a close encounter or a contact between them.

Thus, for approaching the nacelle with the helicopter, the instrument is prepared to be moved from the first position in respect to the nacelle into a second position in respect to the nacelle. The second position is a position where the instrument is not in danger to come in contact with the helicopter. The second position is out of the air space needed by the helicopter to approach the nacelle of the wind turbine.

Thus the instrument is out of the air space needed by the helicopter, when the instrument is in the second position. Thus the instrument can not come into contact with the helicopter or can be damaged by the approach of the helicopter.

Thus the approach to the wind turbine is more save for the helicopter and for the personnel.

A control system with a remote control is coupled with the instrument in a way that the instrument is movable between the first and the second position by a command from a place being remote from the nacelle.

The instrument is movable between the first and the second position. A control system is connected to the instrument to control the movement of the instrument.

A remote control is coupled to the control system. The remote control interacts with the control system to exchange signals. A signal can be send from the remote control to the control system to initiate or control the movement of the instrument.

The remote control can be connected to the control system by a cable. Thus the remote control can be arranged within the wind turbine.

Preferably, the remote control is a wireless remote control. Thus the remote control can be physically decoupled from the control system and can be used at a place remote from the nacelle. Thus a signal to move the instrument can be send from the remote control to the control system from a place remote from the nacelle. This can be for example a place at the ground in the vicinity of the wind turbine, or a control center of the wind turbine, or from within the helicopter.

Thus the instrument can be moved from a first position into the second position from a place remote from the control system. Thus the movement of the instrument can be influenced from a remote place.

Thus the position of the instrument can be changed when the helicopter approaches the wind turbine. Thus the position of the instrument can be influenced from the helicopter.

The instrument is arranged close to the rear side of the nacelle.

In the case that the instrument is a wind vane or an anemometer, the air used for the measurement is disturbed by the rotor of the wind turbine during operation of the wind turbine. Thus measurements taken close to the rotor are incorrect or not exact.

The bigger the distance between the measurement instrument and the rotor, the more correct are the values measured.

When the measurement instrument is arranged close to the rear end of the nacelle, the measurement instrument is positioned with a certain distance to the rotor of the wind turbine. The rear end of the nacelle is the side pointing away from the rotor of the wind turbine. The area close to the rear side of the nacelle includes for example the area on top of the nacelle or at the side of the nacelle that is in the neighbourhood of the rear side of the nacelle.

The instrument can also be an air traffic warning light. The best visibility of the air traffic warning light can be achieved with a certain distance between the rotor of the wind turbine and the air traffic warning light. The bigger the distance is the better is the visibility of the light. Thus the distance between the rotor of the wind turbine and the air traffic warning light is maximized, when the air traffic warning light is arranged close to the rear side of the nacelle.

Thus when the instrument is arranged close to the rear side of the nacelle, the instrument can be used in a way to serve its purpose best. Thus measurement taken close to the rear side of the nacelle are more reliable, or the signal of an air traffic warning light installed close to the rear side of the nacelle is best visible.

The instrument and the nacelle are connected by a flexible tube, which is used for a transfer of signals and/or power between the instrument and the nacelle.

The instrument is connected to an electrical system of the wind turbine. Usually the connection is achieved by a cable. The cable transfer power or signals from the electrical system to the instrument or vice versa.

When the instrument is moved from a first position into a second position the cables attached to the instrument have to be moved, too.

A flexible tube is provided that is connected to the nacelle with one end and to the instrument with a second end. A cable necessary for power and/or signals is arranged in the flexible tube. Thus the cable is protected from environmental influence like rain or ice.

Thus a flexible tube can easily be bended moved. The cable can be securely guided inside a flexible tube. Thus the cable can be bended or moved together with the flexible tube while they are protected from environmental influences.

A drive like an electrical motor-system or a pneumatic-system or a hydraulic-system is arranged at the instrument and/or at the nacelle to change the position of the instrument from the first position to the second position.

A drive can perform a movement of the instrument from a first position into a second position.

A drive is used to move the instrument from a first into a second position. The drive is connected to the instrument and the nacelle or a support structure of the nacelle. The drive moves the instrument relative to the nacelle. Thus the instrument can be moved from a first position into a second position. Thus the instrument can be moved by a drive in an automated non-manual way. Thus no personnel is needed at the instrument to move the instrument.

The instrument is attached to a rod.

The instrument is attached to a rod, whereby the rod is attached to the nacelle. Thus the instrument is arranged with a certain distance to the nacelle. Thus the measurements or the warning function of the instrument can be performed more reliable. The instrument can be moved including the rod.

The rod is placed in a channel, and the channel penetrates the top side of the nacelle in a way that the longitudinal axis of the rod is mainly vertical.

The rod is arranged in the channel. The channel is mainly vertical. The rod is also arranged mainly vertical with its longitudinal axis. The rod is moved along its longitudinal axis. Thus the rod can be moved in or through the channel from an upper into a lower position.

Thus the instrument that is connected to the rod is moved mainly vertical from an upper into a lower position. The upper position equals the first position of the instrument and the lower position equals the second position of the instrument.

The channel shows a larger diameter then the rod, thus the rod is guided inside the channel together with the assigned instrument.

The channel penetrates the top side of the nacelle. The rod is moved longitudinal inside or through the channel. Thus the rod can be moved from an upper position into a lower position. The lower position is a position, where the main part of the rod is inside the nacelle.

Thus the instrument is moved from a first position into a second position, while the rod is moved mainly vertically inside or through the channel into the nacelle.

Thus the rod is at least partially inside the nacelle, when the instrument is in the second position. Thus the rod is protected against damages from environmental influences or from the helicopter operation.

The rod contains a telescopic mechanism.

The telescopic mechanism can be extended and retracted. The rod is longer when the telescopic mechanism is extended. Thus the instrument is in a first position.

The instrument can be lowered into a second position, when the telescopic mechanism is retracted.

The rod comprises a toothed rim that is arranged to interact with a drive and a gear wheel.

Thus the rod is moved, when the drive is in operation and turns the gear wheel. Thus the rod can be moved from an upper into a lower position.

The rod is hollow, while electrical wires are located and guided in the hollow rod.

Thus the instrument is connected to an electrical system of the wind turbine. Thus the instrument can receive power or signals. In addition the cables are protected from environmental impacts and are protected from damages during the movement of the rod.

The instrument is connected with a tilt mechanism, thus the instrument is pivotable between the first and the second position.

Thus the instrument can be moved from a first position into a second position while the rod is pivoted from a first position into a second position. The first position of the rod is a position where the longitudinal axis of the rod is oriented mainly vertical. The rod can be pivoted around an axis of rotation.

A drive, preferably an electrical motor-system or a pneumatic-system or a hydraulic-system, is arranged to interact with the tilt mechanism for pivoting of the instrument.

A drive is used to move the instrument from a first into a second position. The drive is connected to the rod and the nacelle or a support structure of the nacelle. The drive interacts with the tilt mechanism to pivot the rod and the instrument from a first into a second position.

Thus the instrument can be moved by a drive in an automated non-manual way. Thus no personnel is needed at the instrument to move the instrument.

The instrument is constructed to measure environmental parameters or the instrument contains a wind vane, an anemometer or an aviation light.

Thus instruments that are constructed to measure enivonmental parameters or instruments like a wind vane, an anemometer or an aviation warning light are movable for a first into a second position. Thus these instruments can be protected from damage due to helicopter operation in the vicinity of the nacelle of the wind turbine.

A method is disclosed, to operate the arrangement wherein the instrument, which is arranged on top of the nacelle, is operated in a first position. The instrument is moved from the first position in a second position if a helicopter approaches the nacelle.
The second position is chosen in a way that an operation of the helicopter in a free airspace in the vicinity of the nacelle is allowed.

The invention is shown in more detail by the help of figures. The figures show a preferred configuration and do not limit the scope of the invention.
- FIG 1: shows a first embodiment of the arrangement.
- FIG 2: shows the instrument in a second position.
- FIG 3: shows a second embodiment of the arrangement.
- FIG 4: shows the second embodiment with the instrument in a second position.
- FIG 5: shows a detail of the first embodiment.
- FIG 6: shows a detail of the second embodiment.

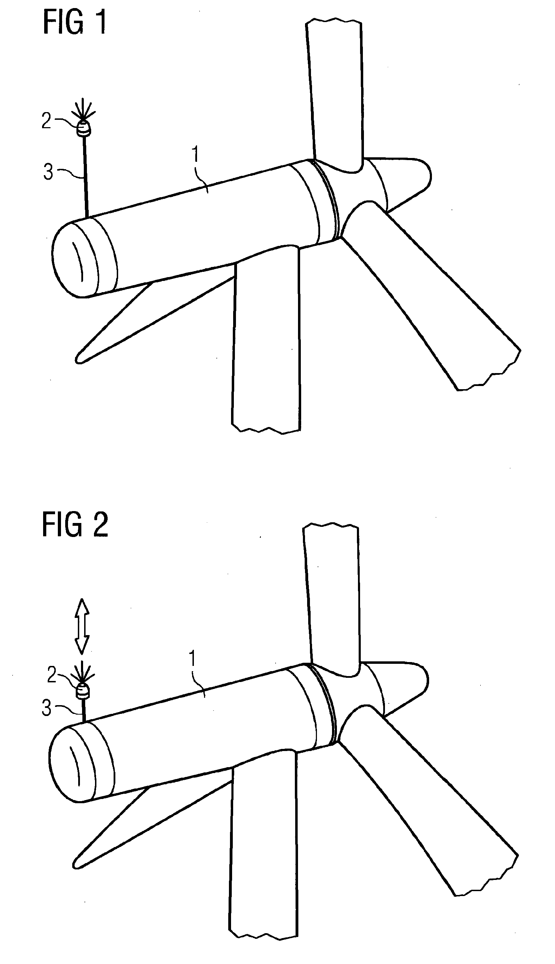

FIG 1 shows a first embodiment of the arrangement.

The arrangement shows a nacelle 1 and an instrument 2. The instrument 2 can be an instrument to measure environmental, weather or wind parameters, or it can be a safety instrument like an air traffic warning light.

The instrument 2 is arranged at the rear end of the nacelle 1 of the wind turbine, at the opposite end of the nacelle 1 than the rotor of the wind turbine. The instrument 2 is arranged on a rod 3.

The rod 3 provides a certain distance between the instrument 2 and the nacelle 1. This can be important to achieve better measurements or for better visibility of the air traffic warning light.

The nacelle 1 of the wind turbine can be approached by a helicopter. When the nacelle 1 of the wind turbine is approached by a helicopter, the instrument 2 is within the air-space needed for the operation of the helicopter. This can lead to an interference with the helicopter, which might lead to an accident with the helicopter or with personnel or might lead to damage at the instrument 2.

FIG 2 shows the instrument 2 in a second position.

The instrument 2 at the nacelle 1 can be moved from a first position into a second position. In this embodiment the movement of the instrument 2 is a mainly vertical movement.

Due to the movement of the instrument 2 from a first position to a second position the airspace in the vicinity of the nacelle 1 is free for the operation of the helicopter.

In this embodiment the distance between the instrument 2 and the nacelle 1 decreases and the instrument 2 is lowered to the surface of the nacelle 1.

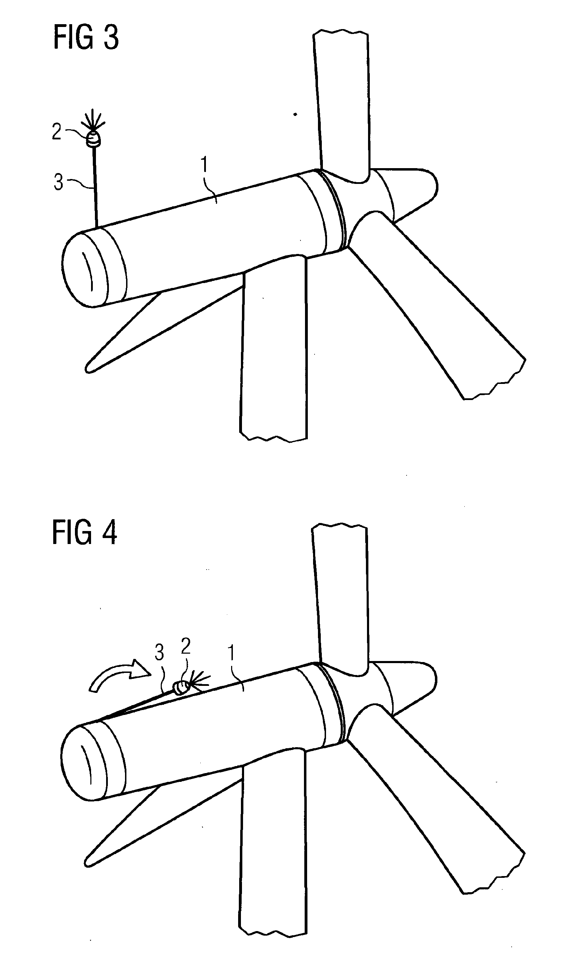

FIG 3 shows a second embodiment of the arrangement.

This figure shows a second embodiment of the invention. An instrument 2 is arranged at the rear end of the nacelle 1. The instrument 2 is attached to a rod 3. In this first position of the instrument, the instrument 2 is within the air-space needed to approach the nacelle 1 with a helicopter.

FIG 4 shows the second embodiment with the instrument 2 in a second position.

The instrument 2 is moved from a first position into a second position. The instrument 2 is attached to a tilt mechanism that connects the rod 3 with the instrument 2 in a way that the rod 3 can be tilted.

In this embodiment the instrument 2 is tilted in the direction towards the hub of the wind turbine.

The distance between the instrument 2 and the nacelle 1 is decreased and the instrument 2 is out of the airspace needed for the helicopter. When the instrument 2 is in the second position, the airspace is free for helicopter operation.

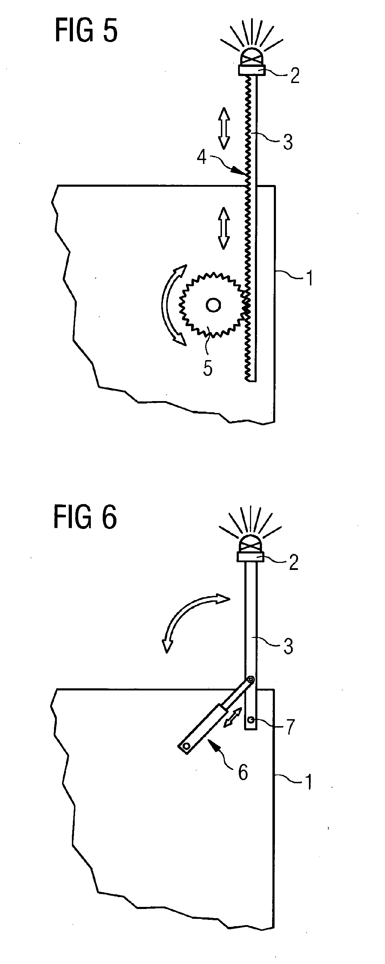

FIG 5 shows a detail of the first embodiment.

The first embodiment allows a mainly vertical movement of the instrument 2 from a first position into a second position.

Fig 5 shows one possible arrangement to achieve the mainly vertical movement of the rod 3 and the instrument 2.

The figure 5 shows a cut through the nacelle 1. The rod 3 is arranged mainly vertical in the nacelle 1. The rod 3 is reaching through an opening in the nacelle 1. The rod 3 comprises a toothed rim 4. A gear wheel 5 interacts with the toothed rim 4. When the gear wheel 5 is rotated by a drive, the gear wheel 5 moves the rod 3 with the toothed rim 4 up or down.

The instrument 2 that is arranged at the uppermost end of the rod 3 is moved up and down together with the rod 3. The instrument 2 can be moved from a first position into a second position by a drive, the gear wheel 5 and the toothed rim 4 at the rod 3.

FIG 6 shows a detail of the second embodiment.

The second embodiment of the invention describes a tilt mechanism. The rod 3 with the instrument 2 can be tilted around an axis of rotation 7.

Figure 6 shows one possibility to tilt the rod 3. The rod 3 is connected to a drive 6. This drive 6 can be a hydraulic of pneumatic cylinder for example. The drive 6 interacts with the rod 3. The drive 6 pulls or pushes the rod 3 with the instrument 2. The rod 3 is rotatable attached to the nacelle 1 at a point 7. The point 7 is used to tilt the rod 3 around the axis of rotation 7.

The rod 3 can be pushed into a mainly vertical orientation that equals a first position of the instrument 2 attached to the rod 3.

The rod 3 can also be pulled into a mainly horizontal orientation. The instrument 2 attached to the rod 3 is then in the second position.

## Claims

1. Method to approach a wind turbine by helicopter,
- whereby the wind turbine comprises a nacelle (1) and an instrument (2),
- wherein the instrument (2), which is arranged on top of the nacelle (1), is operated in a first position,
- wherein the instrument (2) is moved from the first position in a second position if a helicopter approaches the nacelle (1),
- while the second position is chosen in a way that an operation of the helicopter in a free airspace in the vicinity of the nacelle (1) is allowed.

2. Method according to claim 1, where a control system with a remote control is coupled with the instrument (2)
- wherein the instrument (2) is moving between the first and the second position by a command from a place being remote from the nacelle (1).

3. Method according to one of the claims 1 to 2, where the instrument (2) and the nacelle (1) are connected by a flexible tube, whereby a cable necessary for power and/or signals is arranged in the flexible tube,
- wherein the cable is bending or moving together with the flexible tube.

4. Method according to one of the claims 1 to 3, where a drive like an electrical motor-system or a pneumatic-system or a hydraulic-system is arranged at the instrument (2) and/or at the nacelle (1),
- wherein the drive is used to move the instrument from a first into a second position.

5. Method according to claim 1 to 4, where the instrument (2) is attached to a rod (3),
- wherein the instrument is moved including the rod.

6. Method according to claim 5, where the rod (3) is placed in a channel, and the channel penetrates the top side of the nacelle (1) in a way that the longitudinal axis of the rod (3) is mainly vertical,
- wherein the rod is moved in or through the channel from an upper into a lower position, whereby the upper position equals the first position of the instrument and the lower position equals the second position of the instrument.

7. Method according to claim 5 or 6, where the channel shows a larger diameter then the rod (3),
- wherein the rod (3) is guided inside the channel together with the assigned instrument (2).

8. Method according to one of the claims 5 to claim 7, whereby the rod (3) contains a telescopic mechanism,
- wherein the telescopic mechanism is extended and retracted.

9. Method according to claim 5 to 7, whereby the rod (3) comprises a toothed rim (4) that is arranged to interact with a drive and a gear wheel (5),
- wherein the rod is moved, when the drive is in operation and turns the gear wheel.

10. Method according to claim 5 to 9, whereby the rod (3) is hollow, while electrical wires are located in the hollow rod, and
- wherein the electrical wires are guided in the hollow rod.

11. Method according to one of the claims 1 to 4, where the instrument (2) is connected with a tilt mechanism,
- wherein the instrument (2) is pivoted between the first and the second position.

12. Method according to claim 11, whereby a drive, preferably an electrical motor-system or a pneumatic-system or a hydraulic-system, is arranged to interact with the tilt mechanism for pivoting of the instrument (2),
- wherein the instrument is moved by the drive in an automated non-manual way.

## Patentansprüche

1. Verfahren zum Annähern an eine Windkraftanlage mit einem Hubschrauber,
- wobei die Windkraftanlage eine Gondel (1) und ein Instrument (2) umfasst,
- wobei das Instrument (2), das auf der Oberseite der Gondel (1) angeordnet ist, in einer ersten Position betrieben wird,
- wobei das Instrument (2) von der ersten Position in eine zweite Position bewegt wird, wenn sich der Gondel (1) ein Hubschrauber nähert,
- während die zweite Position so ausgewählt wird, dass ein Betrieb des Hubschraubers in einem freien Luftraum in der Nähe der Gondel (1) ermöglicht wird.

2. Verfahren nach Anspruch 1, wobei ein Steuerungssystem mit einer Fernsteuerung mit dem Instrument (2) gekoppelt ist,
- wobei sich das Instrument (2) auf einen Befehl von einem Ort aus, der von der Gondel (1) entfernt liegt, zwischen der ersten und der zweiten Position bewegt.

3. Verfahren nach einem der Ansprüche 1 bis 2, wobei das Instrument (2) und die Gondel (1) durch einen Schlauch verbunden sind, wobei ein für Energie und/oder Signale erforderliches Kabel in dem Schlauch angeordnet ist,
- wobei sich das Kabel zusammen mit dem Schlauch biegt oder bewegt.

4. Verfahren nach einem der Ansprüche 1 bis 3, wobei ein Antrieb wie etwa ein Elektromotorsystem oder ein Pneumatiksystem oder ein Hydrauliksystem am Instrument (2) und/oder an der Gondel (1) angeordnet ist,
- wobei der Antrieb zum Bewegen des Instruments von einer ersten in eine zweite Position verwendet wird.

5. Verfahren nach Anspruch 1 bis 4, wobei das Instrument (2) an einer Stange (3) angebracht ist,
- wobei das Instrument einschließlich der Stange bewegt wird.

6. Verfahren nach Anspruch 5, wobei die Stange (3) in einem Kanal platziert ist und der Kanal derart durch die Oberseite der Gondel (1) dringt, dass die Längsachse der Stange (3) hauptsächlich vertikal ist,
- wobei die Stange in oder durch den Kanal von einer oberen in eine untere Position bewegt wird, wobei die obere Position der ersten Position des Instruments entspricht und die untere Position der zweiten Position des Instruments entspricht.

7. Verfahren nach Anspruch 5 oder 6, wobei der Kanal einen größeren Durchmesser als die Stange (3) aufweist,
- wobei die Stange (3)im Inneren des Kanals zusammen mit dem zugewiesenen Instrument (2) geführt wird.

8. Verfahren nach einem der Ansprüche 5 bis 7, wobei die Stange (3) einen Teleskopmechanismus enthält,
- wobei der Teleskopmechanismus ausgefahren und eingefahren wird.

9. Verfahren nach Anspruch 5 bis 7, wobei die Stange (3) einen gezahnten Rand (4) umfasst, der zur Wechselwirkung mit einem Antrieb und einem Getrieberad (5) angeordnet ist,
- wobei die Stange bewegt wird, wenn der Antrieb in Betrieb ist und das Getrieberad dreht.

10. Verfahren nach Anspruch 5 bis 9, wobei die Stange (3) hohl ist, während sich elektrische Drähte in der hohlen Stange befinden, und
- wobei die elektrischen Drähte in der hohlen Stange geführt werden.

11. Verfahren nach einem der Ansprüche 1 bis 4, wobei das Instrument (2) mit einem Kippmechanismus verbunden ist,
- wobei das Instrument (2) zwischen der ersten und der zweiten Position geschwenkt wird.

12. Verfahren nach Anspruch 11, wobei ein Antrieb, vorzugsweise ein Elektromotorsystem oder ein Pneumatiksystem oder ein Hydrauliksystem, zur Wechselwirkung mit dem Kippmechanismus zum Schwenken des Instruments (2) angeordnet ist,
- wobei das Instrument automatisiert nichtmanuell durch den Antrieb bewegt wird.

## Revendications

1. Procédé pour approcher une éolienne par hélicoptère,
- dans lequel l'éolienne comprend une nacelle (1) et un instrument (2),
- dans lequel l'instrument (2), qui est agencé au sommet de la nacelle (1), est utilisé dans une première position,
- dans lequel l'instrument (2) est déplacé de la première position à une deuxième position si un hélicoptère approche de la nacelle (1),
- dans lequel la deuxième position est choisie de manière à ce qu'une opération de l'hélicoptère dans un espace aérien libre à proximité de la nacelle (1) soit autorisée.

2. Procédé selon la revendication 1, dans lequel un système de commande avec une commande à distance est couplé avec l'instrument (2)
- dans lequel l'instrument (2) est mobile entre la première position et la deuxième position par une commande d'un lieu étant distant de la nacelle (1).

3. Procédé selon l'une des revendications 1 à 2, où l'instrument (2) et la nacelle (1) sont connectés par un tube flexible, dans lequel un câble nécessaire pour une alimentation et/ou des signaux est agencé dans le tube flexible,
- dans lequel le câble est cintré ou déplacé en même temps que le tube flexible.

4. Procédé selon l'une des revendications 1 à 3, où un entraînement comme un système à moteur électrique ou un système pneumatique ou un système hydraulique est agencé au niveau de l'instrument (2) et/ou au niveau de la nacelle (1),
- dans lequel l'entraînement est utilisé pour déplacer l'instrument d'une première à une deuxième position.

5. Procédé selon l'une des revendications 1 à 4, où l'instrument (2) est fixé à une tige (3),
- dans lequel l'instrument est déplacé en incluant la tige.

6. Procédé selon la revendication 5, où la tige (3) est placée dans un canal, et le canal pénètre le côté supérieur de la nacelle (1) de manière à ce que l'axe longitudinal de la tige (3) soit essentiellement vertical,
- dans lequel la tige est déplacée dans ou à travers le canal d'une position supérieure à une position inférieure, dans lequel la position supérieure est égale à la première position de l'instrument et la position inférieure est égale à la deuxième position de l'instrument.

7. Procédé selon la revendication 5 ou 6, où le canal montre un diamètre plus grand que la tige (3),
- dans lequel la tige (3) est guidée à l'intérieur du canal en même temps que l'instrument (2) assigné.

8. Procédé selon l'une de la revendication 5 à la revendication 7, dans lequel la tige (3) contient un mécanisme télescopique,
- dans lequel le mécanisme télescopique est étendu et rétracté.

9. Procédé selon les revendications 5 à 7, dans lequel la tige (3) comprend un bord denté (4) qui est agencé de façon à interagir avec un entraînement et une roue d'engrenage (5),
- dans lequel la tige est déplacée lorsque l'entraînement est en fonctionnement et fait tourner la roue d'engrenage.

10. Procédé selon les revendications 5 à 9, dans lequel la tige (3) est creuse, tandis que des fils électriques sont positionnés dans la tige creuse, et
- dans lequel les fils électriques sont guidés dans la tige creuse.

11. Procédé selon l'une des revendications 1 à 4, où l'instrument (2) est connecté avec un mécanisme de bascule,
- dans lequel l'instrument (2) est fait pivoter entre la première et la deuxième position.

12. Procédé selon la revendication 11, dans lequel un entraînement, préférablement un système à moteur électrique ou un système pneumatique ou un système hydraulique, est agencé pour interagir avec le mécanisme de bascule pour un pivotement de l'instrument (2),
- dans lequel l'instrument est déplacé par l'entraînement d'une manière non manuelle automatisée.
